# EUROPEAN PATENT SPECIFICATION

(11) **EP 1 579 822 B1**
(45) Date of publication and mention of the grant of the patent: **29.04.2009**
(21) Application number: 05251711.7
(22) Date of filing: 21.03.2005
(51) Int. Cl.: A61C 15/04, A61C 19/06

(54) **Dental floss head device with a flavor delivery means**
Zahnseidenvorrichtungskopf mit einem Freisetzungssystem für Aromastoffe
Tête de dispositif de fil dentaire avec un systeme de liberation d'arôme

(30) Priority: 22.03.2004 US 805737
(43) Date of publication of application: 28.09.2005
(73) Proprietor: JOHNSON & JOHNSON CONSUMER COMPANIES, INC., Skillman, NJ 08558 (US)
(72) Inventor: Ochs, Harold D., Flemington, NJ 08822 (US)
(74) Representative: Mercer, Christopher Paul

(56) References cited:
- WO-A-03/043523
- US-A- 3 631 869
- US-A- 5 388 600

## Description

### Background of the Invention

### Field of the Invention

The present invention relates to a dental floss device that is adapted to deliver flavor and/or chemotherapeutic agents to the mouth.

### Description of the Prior Art

The desire for adding flavor to the mouth and teeth while flossing has lead to the development of flavored dental floss coatings. Dental flosses having flavoring applied directly to the floss are well known in the art. In use, flavored dental floss is inserted between teeth. The dental floss leaves a light flavoring in the mouth as the floss is passed between teeth.

Flavored dental floss is typically packaged and sold in lots of twenty-four or thirty-six units. The process for making flavored dental floss typically involves placing a traditional flavor system including flavor such as spray dried flavor in a coating such as a microcrystalline wax, then applying the coating to a fiber substrate to generate a dental floss. Dental floss holders (see for example US 5 388 600) have recently become a popular way of flossing between teeth. If these wax-coated dental flosses are used in an injection molding process for making dental floss holders, the coating will eventually clog the injection mold and cause the molding machine to jam. Furthermore, the amount of flavor available is small and thus only a hint of flavor can be provided through this technique.

United States Patent Number 5,165,913 discloses A CONTROLLED RELEASE INTERPROXIMAL DELIVERY SYSTEM, wherein the dental floss contains surfactant and silicone preparations with added chemotherapeutic agents. Unlike the present invention, the '913 patent provides flavor only to the floss, allowing for just a small amount of flavoring to be inserted into a user's mouth.

In United States Patent Number 6,591,844, ELASTOMERIC MONOFILAMENT DENTAL TAPES are disclosed. In the '844 patent dental tape has saliva soluble coatings, which are directly on the floss. By contrast, the present invention has a floss head device with floss extending there-between, wherein the head device contains cavities, which hold a larger amount of flavoring.

In another United States Patent Number 5,098,711, a METHOD OF TREATING THE ORAL CAVITY WITH DENTAL FLOSS CONTAINING CHEMOTHERAPEUTIC AGENTS is disclosed. In the '711 patent, the dental floss uses a surfactant, silicone and chemotherapeutic agent, which are released from the dental floss unlike the present invention's release mechanism, delivering only a small amount of flavoring and/or other chemicals.

Dental floss devices with flavoring or chemicals attached to the floss itself are difficult to process and only deliver a small amount of flavoring. The provision of a flavored dental floss device head would simplify processing and would improve flavor delivery to a user's mouth. None of the above inventions and patents, taken either singly or in combination is seen to describe the instant invention as claimed. Therefore, there is a need for a dental floss head device having an improved flavor-delivery feature.

### Summary of the Invention

In accordance with the present invention there has been provided a dental floss holder and a dental floss device as described in the following claims.

### Brief Description Of The Drawings

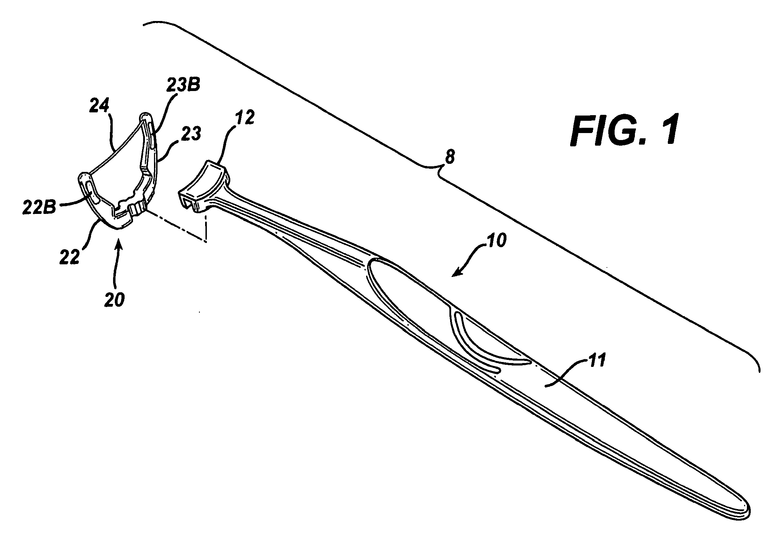

FIG. 1 is an exploded perspective view of one embodiment of a dental floss holder device in accordance with the present invention;
FIG. 2 is a perspective view of the dental floss holder in FIG. 1, in accordance with the present invention;
FIG. 3 is a front view of a dental floss holder device in accordance with the present invention;

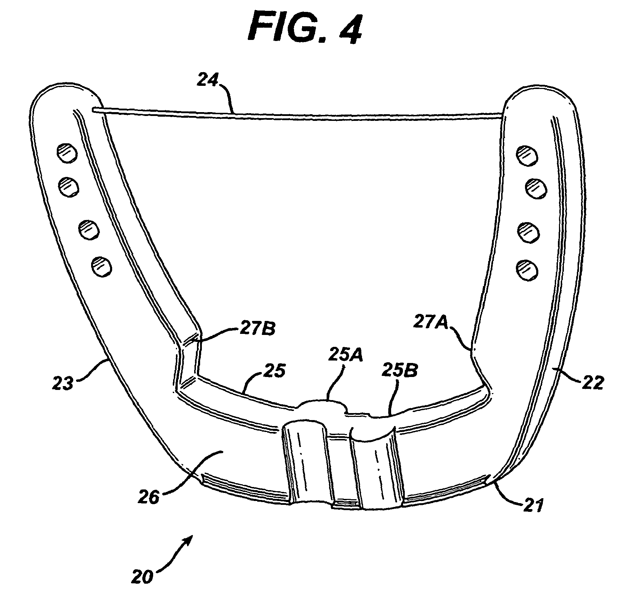

FIG. 4 is a rear view of the dental floss holder in accordance with the present invention;

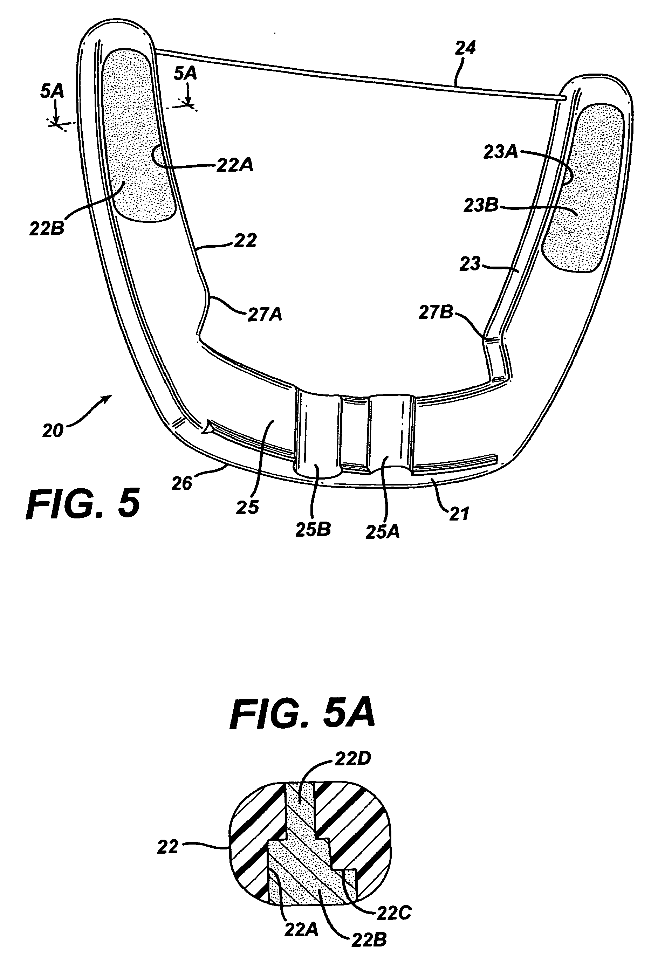

FIG. 5 is another embodiment of FIG. 3 in accordance with the present invention;
FIG. 5A is a cross-sectional view of FIG. 5 at line 5A-5A; and

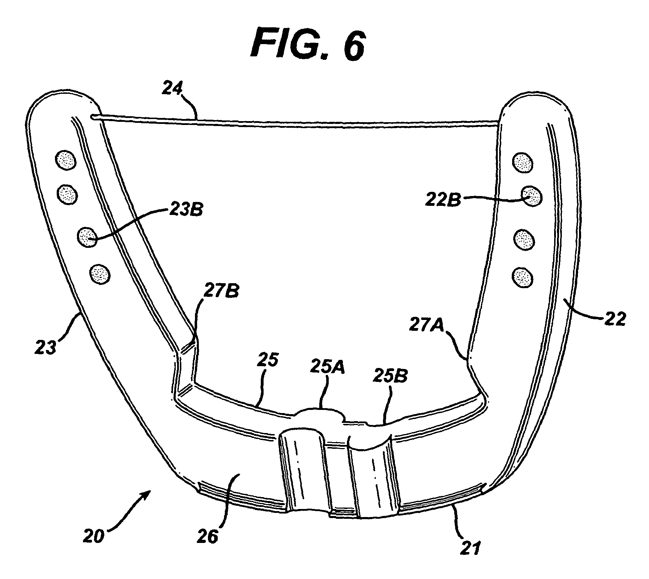

FIG. 6 is another embodiment of FIG. 4 in accordance with the present invention.

### Detailed Description Of Preferred Embodiments

The present invention is directed to a dental floss device having a base portion; and a pair of spaced-apart arms extending from the base portion to accommodate a length of dental floss therebetween. Each of said pair of spaced-apart arms has a surface and the surface of at least one of said arms is provided with a cavity capable of containing a flavored substance, an active or a combination of a flavored substance and an active. In one embodiment of the invention, the dental floss device includes a handle and a dental floss holder. The handle and dental floss holder may be formed as an integral, unitary structure or alternatively, the dental floss holder may be separable from the handle and formed as discrete units. When the dental floss holder is formed as a discrete unit, it is preferably stackable, that is, easily capable of being stacked, one on top of an adjacent unit in substantially parallel fashion.

The handle and flavored stackable dental floss holder comprising the dental floss device of the present invention may be made of any suitable material known in the art. Suitable materials include polymers such as, but not limited to, acrylics, such as poly methyl methacrylate; polyolefins, such as polyethylene and polypropylene; polyesters, such as polycaprolactone; co-polyesters; polycarbonate; and mixtures thereof.

The handle and dental floss holder may be made of the same material or different materials. Preferably, the flavored dental floss holder (exclusive of the dental floss material) is made of a material that is softer than the material from which the handle is made. In a preferred embodiment, the dental floss holder is made from a polypropylene material and the handle is made of co-polyester material.

The handle and stackable dental floss holder of the present invention may be made by any suitable process known in the art. Injection molding is preferred.

The flavored dental floss holder includes two spaced-apart arms having at least one cavity positioned thereon. Each cavity can be extended through the arm or closed to one side. In use, each cavity contains flavoring and/or chemotherapeutic agents therein. The shape of the cavity is not critical and may be in the form of a square, circle, triangle or any shape formed therein. The cavity will preferably contain mechanisms that will help retain a flavor system in place. These will typically be a roughened surface (in contrast to a smooth surface), protrusions extending into the cavity or above the cavity for keeping the flavor system from becoming loose within the cavity, or in the case where the cavity is closed on one side, through holes extending from the underside surface of the cavity through to the other side of the floss holder. The holes preferably contain a tapered section that increases in diameter as you move away the cavity surface. This way when melted material flows into the hole and solidifies, a lock will be formed which holds the flavor system in place. The dental floss holder retains a length of dental floss for cleaning between teeth. Any dental floss material known in the art may be used in the dental floss holder of the present invention. The dental floss material may be a monofilament or a multi-filament yam comprising a plurality of such monofilaments.

Flavoring in the form of a water soluble or water insoluble substance may be filled into the cavity of the floss holder's arms. The substance would be water soluble preferably, in which flavor droplets, sweeteners and actives are dispersed. The substance may also contain commercially available spray dried flavors. Suitable water soluble substances include, but are not limited to, polyethylene glycols (such as PEG 1000 to PEG 5000), ethylene oxide/propylene oxide copolymers, such as those commercially available under the trade name PLURONIC®, and polyvinyl alcohols. These substances may be heated and flavor oil may be added to homogenized the flavor system. This homogenization breaks up the flavor into droplets and disperses it into the substance. The substance and flavor droplets may be filled into the cavity(s) of the arms where it may cool, solidify and bond. Suitable water insoluble substances include, but are not limited to, an emulsion of oil and water soluble substances with flavor immersed therein and microcrystalline wax. The water insoluble substance preferably has a low melting point, e.g., below 82 degrees C (180 degrees F) and more preferably, e.g., below 60 degrees C (140 degrees F). Typically, spray dried flavor is used in conjunction with insoluble substances. It should be noted that water insoluble substances yield low flavor delivery when used this way. The water soluble or insoluble substance flavorant is generally known as a flavor system.

An "active", as used herein, may be any agent that is capable of delivering a health or cleansing benefit to the oral cavity. In a preferred embodiment the active is a chemotherapeutic agent. Suitable chemotherapeutic agents include, but are not limited to, anti-microbials of ionic and non-ionic such as alkyl trimethyl ammonium bromide, chlorohexisdenine, sanguinaria, triclosan, zinc sulfate, antibiotics such as tetracycline, antioxidants desensitizers such as potassium nitrate, remineralizing agents such as compounds of fluoride such as sodium fluoride or stannous fluoride, anti-tartar agents such as tetra sodium pyrophosphate (TSPP), plaque control agents such as cetyl pyridinium chloride, cleaning substances such as surfactants and emulsifiers such as sodium lauryl sulfate, sodium lauryl sacosinate, surfactants such as block co-polymers, coating substances such as silicones, carbowaxes, silicone glycol copolymers and polydimethylsiloxane teeth whitening and bleaching agents such as calcium peroxide, pH buffering agents such as buffered or acidulated phosphofluoride, sodium monofluorophophate antifungal agents and hemostatic agents such as vitamin K and calcium ions in the form of water-soluble calcium salts.

Dental flosses in the form of a multi-filament yarn may be circular in cross section or flat, and typically have a denier ranging from about 22 g/km (200 denier) to about 156 g/km (1400 denier). The denier of the individual fibers typically ranges from about 1 denier to about 6, although other deniers may be used in some circumstances if desired. The yarn may be twisted or untwisted as well as coated with substances to prevent fraying and provide ease of sliding between teeth.

Psuedo-monofilament yarns may also be used as dental floss material in the present invention. Pseudo-monofilament yarns are made by extruding bi-component fibers, each fiber comprising a core of one polymer and a sheath of a different polymer, then either partially or totally melting the sheaths of the fibers to bond or fuse the fibers, resulting in a monofilament look and feel. One example of a suitable bi-component fiber for making pseudo-monofilament yam is a core of nylon 6 with a sheath of PEBAX^{®} brand polyether/amide copolymer. Other materials besides nylon can be used for the core of the bi-component fibers and other polymeric materials besides polyether/amide copolymer may be used as the sheath material.

Other dental floss materials which may be used in the present invention include, but are not limited to, nylon 6-6, nylon 6, polypropylene, polyethylene, high molecular weight polyethylene, ultra high molecular weight polyethylene, monofilament polytetrafluoroethylene, and the like materials. Combinations of such materials are also acceptable as long as they provide the floss with strength and resistance to fraying. Ultra high molecular weight polyethylene is a preferred dental floss material.

The individual monofilaments comprising a multifilament dental floss yam may, if desired, be air entangled. If the yam is air entangled, the air entanglement nodes may be from about 1.25 cm to about 5.2 cm apart, preferably from 2 cm to 3 cm apart. One type of air entangled yarn is described in U.S. Patent 5,908,039.

As is known in the art, the dental floss may be twisted. If the dental floss is twisted, it is preferable to have less than 6 turns per 2.54 cm, and more preferably less than 5 turns per 2.54 cm.

As is known in the art, the dental floss may be coated with waxes, flavorants, active ingredients, and the like.

The U.S. Patent 5,538,023 to Oczkowski et al. is discloses one process of manufacturing dental floss holders, includes feeding dental floss through a multi-cavity mold and injecting plastic into the mold to form the holders. After completion of the injection-molding step, the floss may then be cut and tied at the ends. Alternatively, the ends are heated to form spheres and retain the floss material in place. The floss in the dental floss holder typically has some slack. In use, it is preferred that the dental floss be taut.

The relationship between the snap fit projections on the dental floss holder and the terminal snap fit recessions of the head portion may be adapted to make the floss material taut when the dental floss device is assembled for use. The length of the head portion is sized so that when the dental floss holder is secured in the U-shaped channel of the head portion, the distance between the arms of the dental floss holder is increased, thus making the floss material taut. The distance by which the arms of the dental floss holder is increased when the dental floss holder is brought into engagement with the head portion of the handle depends on the amount of slack in the dental floss material when the dental floss holder is out of engagement with the head portion. Typically, this distance ranges from about 0.13 mm (0.005 inch) to about 1.53 mm (0.06 inch), preferably from about 0.25 mm (0.01 inch) to about 0.51 mm (0.02 inch).

Examples are provided below to further illustrate the dental floss devices of the present invention. The invention should not be construed as being limited to the specific details set forth herein.

### Example 1 - Handle

A co-polyester handle according to the present invention was made by injection molding. Referring now to the appended drawings, handle 10 comprises an elongated gripping portion 11 and a head portion **12** at its distal end. Head portion **12** extends transversely of the longitudinal axis of gripping portion **11,** as a result of which handle **10** has a generally T-shaped configuration. Head portion **12** includes a generally U-shaped channel for releasably receiving a dental floss holder of the type mentioned hereinabove and in Example 2. The U-shaped channel comprises a convex floor and two spaced apart walls, and First wall comprises a protrusion and an indentation spaced laterally therefrom. Second defining the U-shaped channel comprises a protrusion and an indentation spaced laterally therefrom. on first wall is located opposite indentation in second wall Indentation on first wall is located opposite protrusion on second wall Protrusions and indentations on walls are sized and arranged to receive in frictional engagement mating indentations and protrusions on lateral sides **25, 26** of base portion **21** of the aforementioned dental floss holder **20.** See also Example 2 hereinafter. Sides of head portion **12** engage snap fit projections **27A, 27B** of dental floss holder **20** when the floss device is assembled for use.

### Example 2 - Flavored Dental Floss Holder

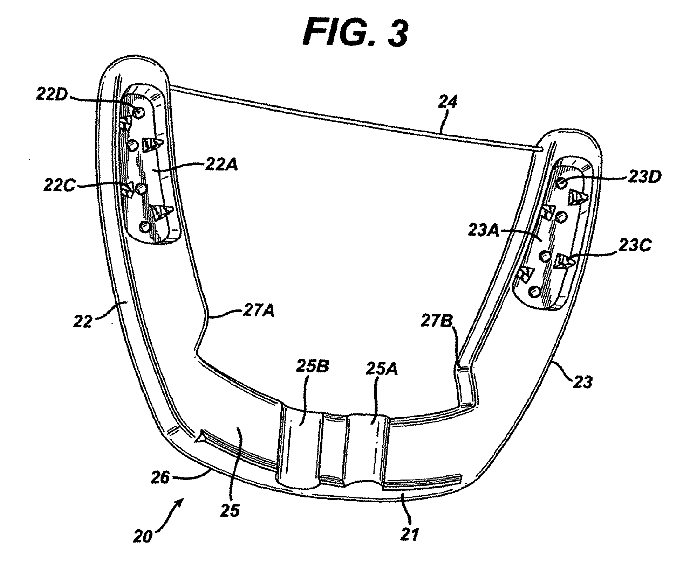

A polypropylene flavored dental floss holder according to the present invention was made by injection molding with Eastman EASTAR® BR003 co-polyester. As is seen in Figure 3, dental floss holder **20** comprises a base portion **21** and a pair of spaced-apart arms **22** and **23** extending from the base portion to accommodate a length of dental floss **24** therebetween. Base portion **21** comprised a pair of lateral sides **25, 26.** Lateral side **25** comprised a protrusion **25A** and an indentation **25B** spaced laterally therefrom. Protrusion **25A** on first lateral side **25** was located opposite indentation **26B** on second lateral side **26.** The indentation **25B** on first lateral side **25** was located opposite protrusion **26A** on second lateral side **26.** The spaced-apart arms included snap fit projections **27A, 27B** for engagement with sides **13, 15** of head portion **12** of handle **10.** The spaced-apart arms **22** and **23** also had at least one cavity **22A, 23A** defined therein for containing a flavoring and/or actives **22B, 23B.** Each cavity 22A, 23A contains protrusions 22C, 23C and through holes 22D, 23D placed therein. The floss holder was machined out to provide each cavity with approximately 0.79 mm (1/32") wide, by 1.59 (1/16") deep and 9.53 mm (3/8") long extending proximate the line where the floss passed through the head upward along the centerline of the floss holder. The dental floss **24** was 48.3 g/km (435 denier) SPECTRA® Fiber 1000 ultra high molecular weight polyethylene, available through Honeywell Incorporated. The cavities were filled with various flavor formulations such as PEG 3350 (68%), H&R spray dried flavor #813581 (28%) and sodium saccharin (4%). Approximately 0.030 grams of flavor were loaded into the cavities. The loading of 0.030 grams of flavor formulation is 40 times greater than what could be delivered from the 19.0 mm (3/4") length of floss in the head using a conventional delivery system. The cavities were filled by hand, where a spatula was dipped into a melted formula and manually placed into the cavity. The cavities may also be filled by using a mechanized system where miniature pistons pump in the exact amount of flavor into the cavity via a heated nozzle system. The cavity's volume may be at least 0.08552 cm³ (0.00521885 cu. in.), more preferably the volume may be 0.01710 cm³ (0.00104377 cu. in.)

### Example 3 - Dental Flossing Device

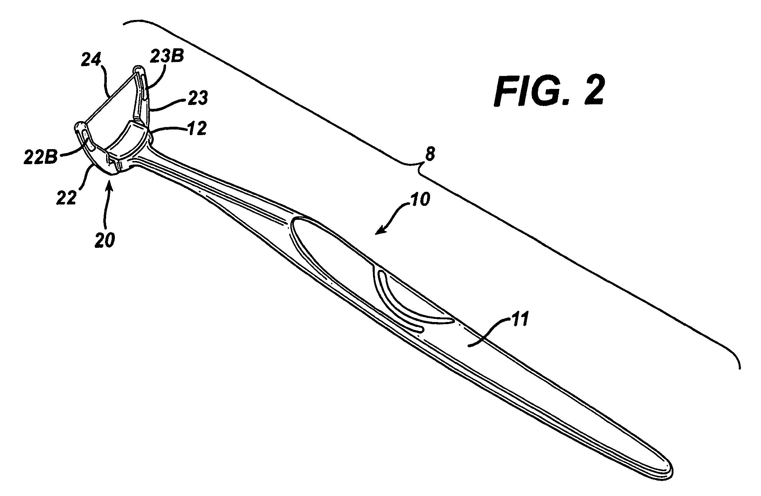

A dental flossing device was assembled by placing the cavity flavored-filled dental floss holder of Example 2 in the head portion of Example 1. The dental flossing device is shown in Figure 2. The detents of the head portion receive the recesses of the dental floss holder. The recesses of the head portion receive the detents of the dental floss holder. The terminal snap fit recessions of the head portion receive the snap fit projections of the dental floss holder.

### Example 4 - Flavored Dental Floss Device in use

The dental floss device of example 3 was assembled and placed in use. The dental floss holder was then given to individuals for an initial trial. The results showed a continuous flavor burst throughout the mouth during flossing of all the teeth. This result further shows that saliva does indeed activate the flavor system to deliver a strong flavor perception. It was found that blending the molecular weights of the polyethylene glycols used as the soluble substance could control the rate of flavor delivery into the oral cavity. Using 100% polyethylene glycol 1000 as the soluble substance provides rapid flavor delivery. The low melting point and high solubility of this substance make it desirable to use polyethylene glycol or polyethylene glycol blends at a higher molecular weight to achieve product survivability under either higher heat or higher humidity conditions, which are often seen in delivering products to the shelf. For this reason a mixture of polyethylene glycol 3350 with 5 to 50% polyethylene glycol 1000 is more desirable. The delivery of flavor into the mouth is longer lasting and the product shelf life significantly lengthened.

## Claims

1. A dental floss holder (20) comprising:
a base portion (21); and
a pair of spaced-apart arms (22,23) extending from the base portion (21) to accommodate a length of dental floss (24) therebetween,
each of said pair of spaced-apart arms (22,23) having a surface, the surface of at least one of said arms comprising a cavity (22A,22B), **characterized in that**:
said cavity contains a composition selected from a flavored substance, an active or a combination of a flavored substance and an active; and
said cavity comprises a mechanism to help retain said composition in place, said mechanism comprising a roughened surface, protrusions (22C,23C) extending into the cavity or above the cavity for keeping the composition from becoming loose within the cavity, or in the case where the cavity (22A,22B) is closed on one side, through holes (22D,23D) extending from an underside surface of the cavity through to the other side of the floss holder.

2. A dental floss device comprising a dental floss holder according to claim 1, and a handle integrally connected to said base portion (21) and extending therefrom.

3. A dental floss device comprising a dental floss holder (20) according to claim 1 and a handle (10) having a gripping portion (11) and a head portion (12), said head portion having opposite engaging surfaces, wherein said base portion (21) of the dental floss holder has a mating portion that is releasably engaged with said engaging surfaces of said handle.

4. A dental floss device according to claim 3, wherein the base portion (21) defines a tongue having lateral engaging surfaces (25,26), each engaging surface having at least one detent (25A) and at least one recess (25B), the detent and recess being laterally spaced apart and aligned with a complementary detent and recess on the opposite engaging surfaces of the head portion (12) of the handle.

5. A dental floss device according to claim 4, having a releasable engagement means between the handle (10) and the floss holder for retaining the dental floss holder securely in position on the head portion (12) of the handle during movement of the dental floss device in use, wherein:
said handle comprises a head portion (12) and an elongated portion, the head portion (12) having a transversely extending groove defined by a floor, lateral receiving walls, and terminal snap fit recessions, each of said receiving walls having at least one detent and at least one recess, the detent and recess being laterally spaced apart and aligned with a complementary detent and recess on the other receiving wall;
the spaced apart arms of the dental floss holder comprises snap fit projections (27A,27B) for engagement with the head portion (12) of the handle, and
the tongue of the dental floss holder (20) engages the transversely extending groove and the lateral engaging surfaces (25,26) contact the lateral receiving walls to define the releasable engagement means, and the snap fit projections (27A,27B) of the floss holder engage the terminal snap fit recessions of the head portion to constitute snap fitting means.

## Patentansprüche

1. Ein Zahnseidehalter (20), umfassend:
einen Basisabschnitt (21); und
ein Paar beabstandete Arme (22, 23), die sich von dem Basisabschnitt (21) erstrecken, um dazwischen ein Stück Zahnseide (24) aufzunehmen,
wobei jeder der beabstandeten Arme (22, 23) des Paares eine Oberfläche aufweist, wobei die Oberfläche wenigstens eines der beiden Arme einen Hohlraum (22A, 22B) aufweist, **dadurch gekennzeichnet, dass:**
der Hohlraum eine Zusammensetzung, ausgewählt aus einem Aromastoff, einem Wirkstoff oder einer Kombination eines Aromastoffes und eines Wirkstoffes, enthält; und
der Hohlraum einen Mechanismus aufweist, um die Zusammensetzung am Platz zu halten, wobei der Mechanismus eine aufgeraute Oberfläche, wobei sich Vorsprünge (22C, 23C) in den Hohlraum oder über den Hohlraum erstrecken, um die Zusammenstellung davor zu bewahren, sich innerhalb des Hohlraumes zu lösen, oder für den Fall, dass der Hohlraum (22A, 22B) auf einer Seite geschlossen ist, Durchgangslöcher (22D, 23D) aufweist, die sich von einer Unterseite des Hohlraumes bis auf die andere Seite des Zahnseidehalters erstrecken.

2. Zahnseidevorrichtung, die einen Zahnseidehalter nach Anspruch 1 sowie einen Handgriff aufweist, der mit dem Basisabschnitt (21) einteilig verbunden ist, und sich von diesem erstreckt.

3. Zahnseidevorrichtung, die einen Zahnseidehalter (20) nach Anspruch 1 und einen Handgriff (10) mit einem Griffabschnitt (11) und einem Kopfabschnitt (12) aufweist, wobei der Kopfabschnitt gegenüberliegende Eingreifseiten aufweist, wobei der Basisabschnitt (21) des Zahnseidehalters einen passenden Abschnitt aufweist, der mit den Eingreifseiten des Handgriffs lösbar verbunden ist.

4. Zahnseidevorrichtung nach Anspruch 3, **dadurch gekennzeichnet, dass** der Basisabschnitt (21) eine Zunge mit lateralen Eingreifseiten (25, 26) definiert, wobei jede Eingreifseite wenigstens eine Arretiereinrichtung (25A) und wenigstens eine Aussparung (25B) aufweist, wobei die Arretiereinrichtung und die Aussparung lateral beabstandet sind und mit einer komplementären Arretiereinrichtung und Aussparung auf den gegenüberliegenden eingreifenden Seiten des Kopfabschnitts (12) des Handgriffs ausgerichtet sind.

5. Zahnseidevorrichtung nach Anspruch 4, die ein lösbares Eingreifmittel zwischen dem Handgriff (10) und dem Seidehalter zum sicheren Halten des Zahnseidehalters in einer Position auf dem Kopfabschnitt (12) des Handgriffs während Bewegung der Zahnseidevorrichtung bei der Verwendung aufweist, wobei:
der Handgriff einen Kopfabschnitt (12) und einen länglichen Abschnitt aufweist, wobei der Kopfabschnitt (12) eine sich transversal erstreckende Kerbe aufweist, die durch einen Boden, laterale Aufnahmewände und abschließende Rasthaken-Aussparongen definiert ist, wobei jede der Aufnahmewände wenigstens eine Arretiereinrichtung und wenigstens eine Aussparung aufweist, wobei die Raste und Aussparung lateral beabstandet sind und mit einer komplementären Arretiereinrichtung und Aussparung auf der anderen Aufnahmewand ausgerichtet sind;
die beabstandeten Arme des Zahnseidehalters Rasthakenansätze (27A, 27B) zum Eingreifen mit dem Kopfteil (12) des Handgriffs umfassen, und
die Zunge des Zahnseidehalters (20) in die sich transversal erstreckende Kerbe greift und die lateralen Eingreifseiten (25, 26) die lateralen Aufnahmewände berühren, um das ablösbare Eingreifmittel zu definieren, und die Rasthakenansätze (27A, 27B) des Seidehalters die abschließenden Rasthakenaussparungen des Kopfabschnitts verbinden, um Rasthakenmittel zu bilden.

## Revendications

1. Support de fil dentaire (20) comprenant :
> une partie de base (21) ; et
> une paire de bras (22, 23) espacés s'étendant de la partie de base (21) pour recevoir une longueur de fil dentaire (24) entre eux,
chacun de ladite paire de bras (22, 23) espacés comportant une surface, la surface d'au moins l'un desdits bras comprenant une cavité (22A, 22B), **caractérisé en ce que** :
ladite cavité contient une composition sélectionnée parmi une substance aromatisée, un actif ou une combinaison d'une substance aromatisée et d'un actif ; et
ladite cavité comprend un mécanisme pour aider à maintenir ladite composition en place, ledit mécanisme comprenant une surface rugueuse, des protubérances (22C, 23C) s'étendant dans la cavité ou au-dessus de la cavité pour empêcher la composition de se déplacer dans la cavité, ou dans le cas où la cavité (22A, 22B) est fermée d'un côté, des trous traversants (22D, 23D) s'étendant d'une surface de dessous de la cavité jusqu'à l'autre côté du support de fil.

2. Dispositif de fil dentaire comprenant un support de fil dentaire selon la revendication 1 et un manche relié d'un seul tenant à ladite partie de base (21) et s'étendant de celle-ci.

3. Dispositif de fil dentaire comprenant un support de fil dentaire (20) selon la revendication 1 et un manche (10) comportant une partie de préhension (11) et une partie de tête (12), ladite partie de tête ayant des surfaces de mise en prise opposées, dans lequel ladite partie de base (21) du support de fil dentaire comporte une partie d'accouplement qui est mise en prise de manière libérable avec lesdites surfaces de mise en prise dudit manche.

4. Dispositif de fil dentaire selon la revendication 3, dans lequel la partie de base (21) définit une languette comportant des surfaces de mise en prise latérales (25, 26), chaque surface de mise en prise comportant au moins un cliquet (25A) et au moins un évidement (25B), le cliquet et l'évidement étant espacés latéralement et alignés avec un cliquet et un évidement complémentaires sur les surfaces de mise en prise opposées de la partie de tête (12) du manche.

5. Dispositif de fil dentaire selon la revendication 4, comportant des moyens de mise en prise libérables entre le manche (10) et le support de fil pour maintenir solidement le support de fil dentaire en position sur la partie de tête (12) du manche pendant le déplacement du dispositif de fil dentaire en utilisation, dans lequel :
➢ ledit manche comprend une partie de tête (12) et une partie allongée, la partie de tête (12) comportant une rainure s'étendant transversalement définie par un fond, des parois de réception latérales, et des évidements d'assemblage par pression terminaux, chacune desdites parois de réception comportant au moins un cliquet et au moins un évidement, le cliquet et l'évidement étant espacés latéralement et alignés avec un cliquet et un évidement complémentaires sur l'autre paroi de réception ;
➢ les bras espacés du support de fil dentaire comprennent des protubérances d'assemblage par pression (27A, 27B) pour une mise en prise avec la partie de tête (12) du manche ; et
➢ la languette du support de fil dentaire (20) vient en prise avec la rainure s'étendant transversalement et les surfaces de mise en prise latérales (25, 26) viennent en contact avec les parois de réception latérales pour définir les moyens de mise en prise libérables, et les protubérances d'assemblage par pression (27A, 27B) du support de fil viennent en prise avec les évidements d'assemblage par pression terminaux de la partie de tête pour constituer des moyens d'assemblage par pression.
